# EUROPÄISCHE PATENTSCHRIFT

(11) **EP 2 253 494 B1**
(45) Veröffentlichungstag und Bekanntmachung des Hinweises auf die Patenterteilung: **04.01.2012**
(21) Anmeldenummer: 10162566.3
(22) Anmeldetag: 11.05.2010
(51) Int. Cl.: B60H 1/00

(54) **Belüftungseinrichtung für eine Fahrerkabine eines Kraftfahrzeugs**
Ventilation device for a driver cabin of a motor vehicle
Dispositif d'aération pour une cabine de conducteur d'un véhicule automobile

(30) Priorität: 20.05.2009 DE 102009003300
(43) Veröffentlichungstag der Anmeldung: 24.11.2010
(73) Patentinhaber: Deere & Company, Moline, IL 61265-8098 (US)
(72) Erfinder: Dietrich, Gunnar, 68199, Mannheim (DE)
(74) Vertreter: Dehnhardt, Florian Christopher

(56) Entgegenhaltungen:
- EP-A1- 1 669 225
- US-A- 4 467 706
- US-A1- 2008 014 856
- US-B1- 6 283 849

## Beschreibung

Die Erfindung betrifft eine Belüftungseinrichtung für eine Fahrerkabine eines Kraftfahrzeugs, mit einem Umluftgebläse zur Erzeugung eines die Fahrerkabine beaufschlagenden Umluftstroms.

Eine derartige Belüftungseinrichtung für eine Fahrerkabine eines landwirtschaftlichen Nutzfahrzeugs geht aus der EP 125 562 A1 hervor. Die bekannte Belüftungseinrichtung umfasst ein Umluftgebläse zur Erzeugung eines Umluftstroms, wozu mittels des Umluftgebläses Kabinenluft angesaugt und nach Durchlaufen einer aus einem Verdampfer und einer Heizwendel bestehenden Klimatisierungseinrichtung in die Fahrerkabine zurückgeführt wird. Eine der Klimatisierungseinrichtung vorgeschaltete Mischkammer dient der Beimischung von Frischluft, die mittels eines Hilfsgebläses außerhalb der Fahrerkabine angesaugt wird. Die bekannte Belüftungseinrichtung sieht einen kontinuierlichen Betrieb des Hilfsgebläses mit einer vom Fahrer einzustellenden Drehzahl vor. Ein dem Hilfsgebläse vorgeschaltetes Filterelement dient der Reinigung der angesaugten Frischluft. Da sich die Oberfläche des Filterelements im Gebrauch mit Verunreinigungen zusetzt, mithin also dessen Durchlässigkeit mit der Zeit abnimmt, ist der Fahrer zur Sicherstellung einer gleichbleibenden Kabinenluftqualität gezwungen, die Drehzahl des Hilfsgebläses bei Bedarf manuell nachzuregeln.

Eine weitere gattungsgemäße Belüftungseinrichtung ist aus dem nächstliegenden Stand der Technik, Dokument US 4 467 706, bekannt.

Es ist daher Aufgabe der vorliegenden Erfindung, eine bezüglich ihres Bedienkomforts verbesserte Belüftungseinrichtung anzugeben.

Diese Aufgabe wird durch eine Belüftungseinrichtung mit den Merkmalen des Patentanspruchs 1 gelöst.

Die Belüftungseinrichtung für eine Fahrerkabine eines Kraftfahrzeugs umfasst ein Umluftgebläse zur Erzeugung eines die Fahrerkabine beaufschlagenden Umluftstroms. Erfindungsgemäß wird dem Umluftstrom mittels eines Hilfsgebläses angesaugte Frischluft derart beigemischt, dass ein ermittelter Kabineninnendruck und/oder ein ermittelter Frischluftvolumenstrom einen jeweils vorgegebenen Mindestwert nicht unterschreitet.

Mit anderen Worten erfolgt die Beimischung der Frischluft selbsttätig entsprechend der für den Kabineninnendruck und/oder den Frischluftvolumenstrom vorgegebenen Mindestwerte. Ein manuelles Nachregeln der Frischluftzufuhr seitens des Fahrers erübrigt sich somit.

Die Vorgabe der Mindestwerte kann nach objektiven Kriterien, beispielsweise entsprechend gesetzlicher Richtlinien erfolgen. So schreibt die Europäische Norm EN 15695-1 für Fahrerkabinen der Kategorien 3 und 4 einen Kabineninnendruck von mindestens 20 Pa und einen Frischluftvolumenstrom von mindestens 30 cbm/h vor.

Zur Ermittlung des Kabineninnendrucks kann die Belüftungseinrichtung einen innerhalb der Fahrerkabine angeordneten Drucksensor aufweisen, der ein den Kabineninnendruck repräsentierendes Drucksignal zur Verfügung stellt. Ferner kann zur Ermittlung des Frischluftvolumenstroms ein Strömungssensor vorgesehen sein. Letzterer stellt ein den Frischluftvolumenstrom repräsentierendes Volumenstromsignal bereit. Beide Signale werden einer Kontrolleinrichtung zur Auswertung zugeführt. Die Kontrolleinrichtung steuert das Hilfsgebläse auf Grundlage der Signale derart an, dass der für den Kabineninnendruck und/oder den Frischluftvolumenstrom jeweils vorgegebene Mindestwert nicht unterschritten wird.

Zur Beimischung der Frischluft umfasst die Belüftungseinrichtung eine von dem Umluftstrom durchflossene Mischkammer, die einen mit dem Hilfsgebläse in Verbindung stehenden Frischlufteinlass aufweist. Der Frischlufteinlass kann insbesondere mit einer verstellbaren Einlassklappe versehen sein, die eine Beeinflussung der beigemischten Frischluftmenge durch Veränderung des Einlassquerschnitts erlaubt. In diesem Fall besteht zusätzlich oder alternativ zur Ansteuerung des Hilfsgebläses die Möglichkeit, die Beimischung der Frischluft durch geeignete Verstellung der Einlassklappe zu verändern. Die Mischkammer ist dem Umluftgebläse vorzugsweise niederdruckseitig vorgeschaltet, sodass eine besonders gleichmäßige Beimischung der Frischluft gewährleistet ist.

Vorteilhafte Ausführungen der erfindungsgemäßen Belüftungseinrichtung gehen aus den Unteransprüchen hervor.

Insbesondere kann die Beimischung der Frischluft nach Maßgabe eines Vergleichs zwischen dem ermittelten Kabineninnendruck und dem für den Kabineninnendruck vorgegebenen Mindestwert und/oder zwischen dem ermittelten Frischluftvolumenstrom und dem für den Frischluftvolumenstrom vorgegebenen Mindestwert erfolgen.

Hierbei kann die beigemischte Frischluftmenge erhöht werden, wenn sich aufgrund des Vergleichs ergibt, dass der ermittelte Kabineninnendruck und/oder der ermittelte Frischluftvolumenstrom den jeweils vorgegebenen Mindestwert unterschreitet. Zur Erzielung einer optimalen Kabinenluftqualität kann die Beimischung der Frischluft derart erfolgen, dass der ermittelte Kabineninnendruck und/oder der ermittelte Frischluftvolumenstrom einen gegenüber dem jeweils vorgegebenen Mindestwert erhöhten Richtwert erreicht.

Erfindungsgemäß ist der Umluftstrom mittels einer Klimatisierungseinrichtung temperierbar, wobei die Beimischung der Frischluft nach Maßgabe einer ermittelten Kabineninnentemperatur erfolgt. Zur Ermittlung der Kabineninnentemperatur kann die Belüftungseinrichtung einen innerhalb der Fahrerkabine angeordneten Temperatursensor aufweisen. Der Temperatursensor stellt ein die Kabineninnentemperatur repräsentierendes Temperatursignal zur Verfügung, das der Kontrolleinrichtung zur Auswertung zugeführt wird.

Erfindungsgemäß wird die beigemischte Frischluftmenge verringert, wenn sich ergibt, dass die ermittelte Kabineninnentemperatur um mehr als einen zulässigen Differenzbetrag von einem vorgegebenen Sollwert abweicht.

Die Verringerung erfolgt vorzugsweise derart, dass der ermittelte Kabineninnendruck und/oder der ermittelte Frischluftvolumenstrom den jeweils vorgegebenen Mindestwert einnimmt. Somit erfolgt die Beimischung untemperierter Frischluft nur insoweit, als dies zur Einhaltung der für den Kabineninnendruck und/oder den Frischluftvolumenstrom jeweils vorgegebenen Mindestwerte unbedingt erforderlich ist. Die Anforderungen an die von der Klimatisierungseinrichtung bereitzustellende Kühl- bzw. Heizleistung lassen sich auf diese Weise verringern, ohne dass eine Beeinträchtigung der Kabinenluftqualität in Kauf genommen werden muss.

Zur Beeinflussung der beigemischten Frischluftmenge kann die Drehzahl des Hilfsgebläses verändert werden. Genauer gesagt weist das Hilfsgebläse einen elektromotorischen Antrieb auf, mittels dessen sich ein auf einer Antriebsachse angebrachter Lüfterrotor in Drehung versetzen lässt. Zur Veränderung der Drehzahl des Lüfterrotors und damit der geförderten Frischluftmenge lässt sich der elektromotorische Antrieb über einen zwischengeschalteten Drehzahlregler seitens der Kontrolleinrichtung nach Maßgabe des Vergleichs zwischen dem ermittelten Kabineninnendruck und dem für den Kabineninnendruck vorgegebenen Mindestwert und/oder dem ermittelten Frischluftvolumenstrom und dem für den Frischluftvolumenstrom vorgegebenen Mindestwert ansteuern. Alternativ ist es auch möglich, dass der Lüfterrotor des Hilfsgebläses verstellbare Förderflügel aufweist. In diesem Fall kann das Hilfsgebläse mit konstanter Drehzahl betrieben werden, wobei sich die Beimischung der Frischluft ausschließlich durch Veränderung der Flügelstellung beeinflussen lässt.

Des Weiteren kann die Klimatisierungseinrichtung zur Temperierung des Umluftstroms sowie der beigemischten Frischluft einen Verdampfer und/oder ein Heizelement umfassen.

Der Verdampfer ist insbesondere Bestandteil eines Kältemittelkreislaufs, der neben dem Verdampfer einen Kompressor zum Verdichten eines in dem Kältemittelkreislauf zirkulierenden Kältemittels, einen luftdurchströmten Kondensator zum Verflüssigen des komprimierten Kältemittels, einen Flüssigkeitsabscheider zum Trennen des verflüssigten Kältemittels, sowie ein dem Verdampfer in Zirkulationsrichtung des Kältemittels vorgeschaltetes Dekompressionsventil zum Expandieren des verflüssigen Kältemittels aufweist. Bei dem Kältemittel handelt es sich beispielsweise um CO₂ oder eine geeignete Kohlenwasserstoffverbindung.

Ferner kann das Heizelement Bestandteil eines Kühlmittelkreislaufs zur Kühlung eines in dem Kraftfahrzeug befindlichen Verbrennungsmotors sein, wobei der Kühlmittelkreislauf neben dem als Heizungswärmetauscher ausgebildeten Heizelement eine Kühlmittelpumpe zum Fördern eines in dem Kühlmittelkreislauf zirkulierenden Kühlmittels sowie einen luftdurchströmten Radiator aufweist. Bei dem Kühlmittel handelt es sich üblicherweise um Wasser, das mit einem geeigneten Frostschutzmittel versetzt ist. Das Heizelement ist dem Verdampfer in Richtung des Umluftstroms derart nachgeschaltet, dass sich der Anteil der durch das Heizelement strömenden Luftmenge und damit die Temperatur des Umluftstroms durch Verstellen einer dem Heizelement zugeordneten Umlenkklappe beeinflussen lässt.

Alternativ ist es denkbar, die Temperatur des Umluftstroms durch Anpassung der Heizleistung des Heizelements zu beeinflussen. Aufgrund des Wegfalls der Umlenkklappe kann das Heizelement in diesem Fall baulich unmittelbar an den Verdampfer angrenzen. Die Anpassung der Heizleistung erfolgt hierbei durch Steuerung der durch den Heizungswärmetauscher hindurchtretenden Kühlmittelmenge. Handelt es sich um ein elektrisch betriebenes Heizelement, so richtet sich die Heizleistung nach der elektrischen Stromaufnahme einer von dem Heizelement umfassten Heizwendel.
Das Umluftgebläse und/oder das Hilfsgebläse ist vorzugsweise als Radiallüfter ausgebildet. Der Radiallüfter weist eine in Richtung seiner Antriebsachse orientierte Luftansaugöffnung auf, wobei die angesaugte Luft umgelenkt und radial zur Antriebsachse ausgeblasen wird.
Ein unerwünschter Zutritt von Verschmutzungen in die Belüftungseinrichtung lässt sich vermeiden, wenn dem Umluftgebläse und/oder dem Hilfsgebläse ansaugseitig ein Filterelement vorgeschaltet ist. Bei dem Filterelement handelt es sich beispielsweise um ein zickzackförmig gefaltetes Filtervlies.

Der beim Öffnen der Fahrerkabine auftretende Druckabfall kann zu einem Unterschreiten des für den Kabineninnendruck vorgegebenen Mindestwerts führen. Um in einem solchen Fall eine Überlastung des Hilfsgebläses zu vermeiden, unterbleibt eine Erhöhung der beigemischten Frischluftmenge, wenn festgestellt wird, dass eine verschließbare Kabinenöffnung, insbesondere ein mit einer Kabinentür versehener Fahrereinstieg, nicht geschlossen ist. Ob dies der Fall ist, lässt sich durch Auswertung des Betätigungszustands eines mit der Kontrolleinrichtung verbundenen und zur Ermittlung des Schließzustands der Kabinenöffnung vorgesehenen Kontaktschalters erkennen.

Zusätzlich oder alternativ kann bei nicht geschlossener Kabinenöffnung die Ausgabe eines Fahrerhinweises erfolgen. Hierzu ist eine Erzeugung geeigneter optischer und/oder akustischer Hinweissignale denkbar.

Die erfindungsgemäße Belüftungseinrichtung wird im Folgenden anhand der beigefügten Zeichnungen näher erläutert. Dabei zeigen:
- Fig. 1: ein Ausführungsbeispiel der erfindungsgemäßen Belüf- tungseinrichtung für eine Fahrerkabine eines Kraftfahr- zeugs, und
- Fig. 2: ein Ausführungsbeispiel eines Verfahrens zum Betreiben der erfindungsgemäßen Belüftungseinrichtung in Gestalt eines Flussdiagramms.

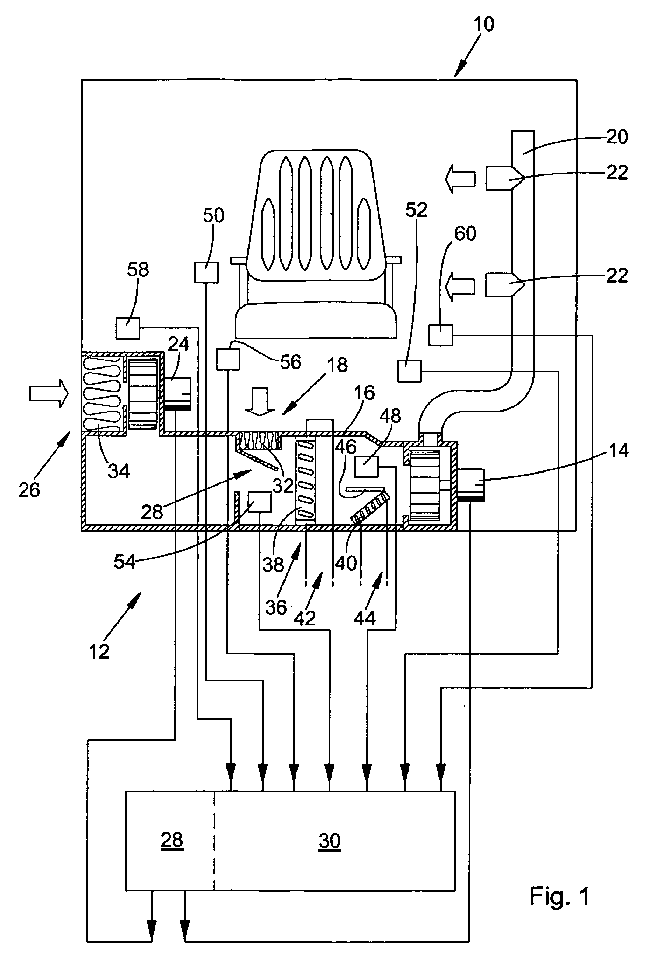

Fig. 1 zeigt ein Ausführungsbeispiel der erfindungsgemäßen Belüftungseinrichtung für eine Fahrerkabine eines Kraftfahrzeugs.

Bei dem Kraftfahrzeug handelt es sich insbesondere um ein nicht näher dargestelltes landwirtschaftliches Nutzfahrzeug, beispielsweise um einen Traktor, eine Erntemaschine, einen Feldhäcksler oder dergleichen. Unbeschadet dessen lässt sich die erfindungsgemäße Belüftungseinrichtung jedoch auch bei jedem anderen Kraftfahrzeug mit geschlossener Fahrerkabine einsetzen.

Die zur Klimatisierung der Fahrerkabine 10 vorgesehene Belüftungseinrichtung 12 umfasst ein Umluftgebläse 14 sowie eine dem Umluftgebläse 14 niederdruckseitig vorgeschaltete Mischkammer 16, die mit einer Lufteinlassöffnung 18 in Verbindung steht. Letztere ist im vorliegenden Fall im Bodenbereich der Fahrerkabine 10 ausgebildet. Die Lufteinlassöffnung 18 kann jedoch auch an einer beliebigen anderen Stelle der Fahrerkabine 10 angeordnet sein, beispielsweise auf mehrere Einlassöffnungen verteilt im Bereich einer den Fahrersitz rückwärtig umgebenden Innenraumverkleidung.

Zur Erzeugung eines die Fahrerkabine 10 beaufschlagenden Umluftstroms ist das Umluftgebläse 14 hochdruckseitig mit einem in die Fahrerkabine 10 mündenden Luftverteilersystem 20 verbunden. Das Luftverteilersystem 20 weist eine Vielzahl von in der Fahrerkabine 10 verteilt angeordneten Luftauslassöffnungen 22 auf. Jede der Luftauslassöffnungen 22 kann mit einer verstellbaren Lamellenblende zur Beeinflussung der Richtung des in die Fahrerkabine 10 austretenden Umluftstroms versehen sein.

Ein mit der Mischkammer 16 hochdruckseitig verbundenes Hilfsgebläse 24 dient der Zufuhr von Frischluft, die über eine an der Außenseite der Fahrerkabine 10 angeordnete Lufteinlassöffnung 26 angesaugt und über einen in der Mischkammer 16 ausgebildeten Frischlufteinlass 28 dem Umluftstrom beigemischt wird.

Zur Beeinflussung der geförderten Umluft- bzw. Frischluftmenge kann die Drehzahl des Umluftgebläses 14 bzw. des Hilfsgebläses 24 verändert werden. Genauer gesagt weist das Umluftgebläse 14 bzw. das Hilfsgebläse 24 einen elektromotorischen Antrieb auf, mittels dessen sich ein auf einer Antriebsachse angebrachter Lüfterrotor in Drehung versetzen lässt. Zur Veränderung der Drehzahl des Lüfterrotors und damit der geförderten Luftmenge lässt sich der elektromotorische Antrieb über einen zwischengeschalteten Drehzahlregler 28 seitens einer Kontrolleinrichtung 30 ansteuern.

Beispielsgemäß ist sowohl das Umluftgebläse 14 als auch das Hilfsgebläse 24 als Radiallüfter ausgebildet. Jeder der Radiallüfter weist eine in Richtung seiner Antriebsachse orientierte Luftansaugöffnung auf, wobei die angesaugte Luft umgelenkt und radial zur Antriebsachse ausgeblasen wird.

Um einen unerwünschten Zutritt von Verunreinigungen in die Belüftungseinrichtung 12 zu vermeiden, ist dem Umluftgebläse 14 bzw. dem Hilfsgebläse 24 ansaugseitig ein Filterelement 32 bzw. 34 vorgeschaltet. Bei dem Filterelement 32 bzw. 34 handelt es sich im vorliegenden Fall um ein zickzackförmig gefaltetes Filtervlies, das Bestandteil einer austauschbaren Filterkassette ist.

Zur Temperierung des Umluftstroms sowie der über den Frischlufteinlass 28 zugeführten Frischluft ist in der Mischkammer 16 eine Klimatisierungseinrichtung 36 angeordnet. Die Klimatisierungseinrichtung 36 umfasst einen Verdampfer 38 und/oder ein Heizelement 40.

Der Verdampfer 38 ist Bestandteil eines Kältemittelkreislaufs 42, der neben dem Verdampfer 38 weitere, der Übersichtlichkeit halber nicht dargestellte Komponenten, insbesondere einen Kompressor zum Verdichten eines in dem Kältemittelkreislauf 42 zirkulierenden Kältemittels, einen luftdurchströmten Kondensator zum Verflüssigen des komprimierten Kältemittels, einen Flüssigkeitsabscheider zum Trennen des verflüssigten Kältemittels sowie ein dem Verdampfer 38 in Zirkulationsrichtung des Kältemittels vorgeschaltetes Dekompressionsventil zum Expandieren des verflüssigen Kältemittels aufweist. Bei dem Kältemittel handelt es sich beispielsweise um CO₂ oder eine geeignete Kohlenwasserstoffverbindung.

Ferner ist das Heizelement 40 Bestandteil eines Kühlmittelkreislaufs 44 zur Kühlung eines in dem Kraftfahrzeug befindlichen Verbrennungsmotors. Der Kühlmittelkreislauf 44 weist neben dem Heizelement 40 weitere, der Übersichtlichkeit halber nicht dargestellte Komponenten, insbesondere eine Kühlmittelpumpe zum Fördern eines in dem Kühlmittelkreislauf 44 zirkulierenden Kühlmittels sowie einen gemeinsam mit dem Kondensator des Kältemittelkreislaufs 42 luftdurchströmten Radiator auf. Bei dem Kühlmittel handelt es sich üblicherweise um Wasser, das mit einem geeigneten Frostschutzmittel versetzt ist. Das Heizelement 40 ist dem Verdampfer 38 in Richtung des Umluftstroms derart nachgeschaltet, dass sich der Anteil der durch das Heizelement 40 strömenden Luftmenge und damit die Temperatur des durch die Mischkammer 16 fließenden Umluftstroms durch Verstellen einer dem Heizelement 40 zugeordneten Umlenkklappe 46 beeinflussen lässt. Die Verstellung der Umlenkklappe 46 erfolgt hierbei mittels eines mit der Kontrolleinrichtung 30 verbundenen Stellelements 48.

Eine in der Fahrerkabine 10 angeordnete Bedienelementanordnung 50 erlaubt eine manuelle Vorgabe der Drehzahl des Umluftgebläses 14 bzw. des Hilfsgebläses 24 sowie die Einstellung der Temperatur des Umluftstroms durch geeignete Verstellung der Umlenkklappe 46. Des Weiteren lässt sich über die Bedienelementanordnung 50 ein automatisierter Betrieb der Belüftungseinrichtung 12 auswählen bzw. auslösen.

Zur Durchführung des automatisierten Betriebs wertet die Kontrolleinrichtung 30 einen ermittelten Kabineninnendruck pᵢₛₜ und einen ermittelten Frischluftvolumenstrom Vᵢₛₜ aus. Der Kabineninnendruck pᵢₛₜ wird mittels eines innerhalb der Fahrerkabine 10 angeordneten Drucksensors 52 ermittelt, der ein den Kabineninnendruck pᵢₛₜ repräsentierendes Drucksignal zur Verfügung stellt. Ferner ist zur Ermittlung des Frischluftvolumenstroms Vᵢₛₜ ein im Bereich des Frischlufteinlasses 28 angeordneter Strömungssensor 54 vorgesehen. Letzterer stellt ein den Frischluftvolumenstrom Vᵢₛₜ repräsentierendes Volumenstromsignal bereit.

Zusätzlich findet eine ermittelte Kabineninnentemperatur Tᵢₛₜ Berücksichtigung. Zur Ermittlung der Kabineninnentemperatur Tᵢₛₜ weist die Belüftungseinrichtung 12 einen innerhalb der Fahrerkabine 10 angeordneten Temperatursensor 56 auf. Der Temperatursensor 56 stellt ein die Kabineninnentemperatur Tᵢₛₜ repräsentierendes Temperatursignal zur Verfügung, das der Kontrolleinrichtung 30 neben dem Drucksignal und dem Volumenstromsignal zur Auswertung zugeführt wird.

Die Fahrerkabine 10 ist von herkömmlicher Bauart und umfasst einen mit einer Kabinentür versehenen Fahrereinstieg. Ein mit der Kontrolleinrichtung 30 verbundener Kontaktschalter 58 dient der Ermittlung des Schließzustands der Kabinentür.

Zur Ausgabe optischer und/oder akustischer Hinweissignale ist die Kontrolleinrichtung 30 ferner mit einem in der Fahrerkabine 10 angeordneten Signaleber 60 verbunden.

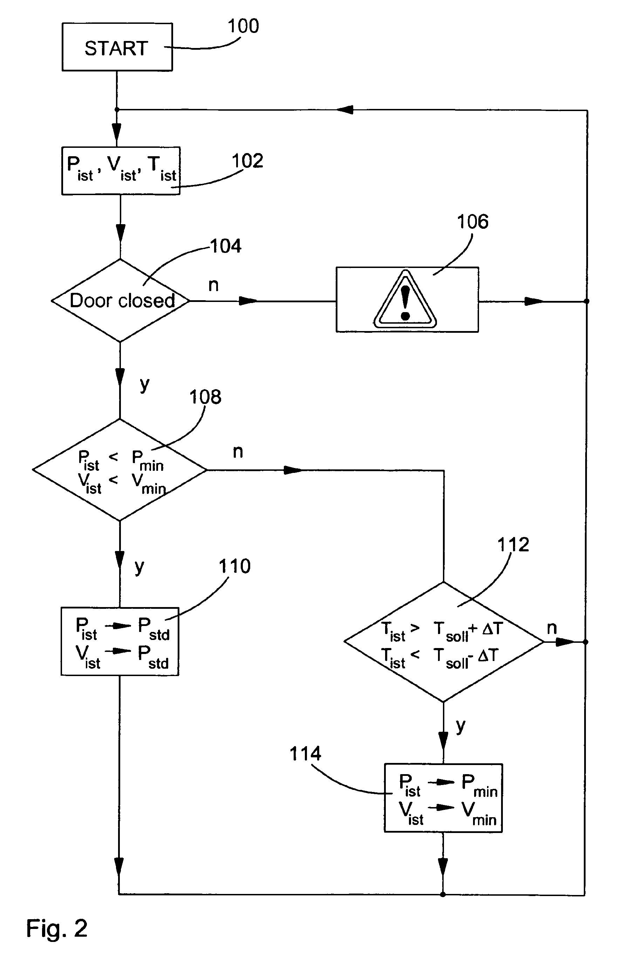

Der automatisierte Betrieb wird nachfolgend anhand des in Fig. 2 dargestellten Flussdiagramms, das ein Ausführungsbeispiel eines Verfahrens zum Betreiben der erfindungsgemäßen Belüftungseinrichtung wiedergibt, näher erläutert.

Das in der Kontrolleinrichtung 30 ablaufende Verfahren wird nach Auslösen des automatisierten Betriebs in einem Initialisierungsschritt 100 gestartet.

In einem auf den Initialisierungsschritt 100 folgenden ersten Verfahrensschritt 102 ermittelt die Kontrolleinrichtung 30 auf Grundlage der von dem Drucksensor 52, dem Strömungssensor 54 sowie dem Temperatursensor 56 bereitgestellten Signale den Kabineninnendruck pᵢₛₜ, den Frischluftvolumenstrom Vᵢₛₜ sowie die Kabineninnentemperatur Tᵢₛₜ. Des weiteren wird der Betätigungszustand des Kontaktschalters 58 ermittelt.
Ergibt sich in einem zweiten Verfahrensschritt 104 durch Auswertung des Betätigungszustands des Kontaktschalters 58, dass die Kabinentür nicht oder nur unzureichend geschlossen ist, erfolgt in einem dritten Verfahrensschritt 106 die Ausgabe eines entsprechenden Fahrerhinweises durch Ansteuerung des Signalgebers 60. Zugleich kehrt das Verfahren zum ersten Verfahrensschritt 102 zurück.

Stellt die Kontrolleinrichtung 30 im zweiten Verfahrensschritt 104 hingegen fest, dass die Kabinentür geschlossen ist, so wird mit einem vierten Verfahrensschritt 108 fortgefahren, in dem der ermittelte Kabineninnendruck pᵢₛₜ und/oder der ermittelte Frischluftvolumenstrom Vᵢₛₜ durch Auswertung des von dem Drucksensor 52 bereitgestellten Drucksignals bzw. des von dem Strömungssensor 54 bereitgestellten Volumenstromsignals mit einem jeweils vorgegebenen Mindestwert pₘᵢₙ bzw. Vₘᵢₙ verglichen wird.

Im vorliegenden Fall erfolgt die Vorgabe der Mindestwerte pₘᵢₙ und Vₘᵢₙ entsprechend der Europäischen Norm EN 15695-1 für Fahrerkabinen der Kategorien 3 und 4. Diese schreibt einen Kabineninnendruck von mindestens 20 Pa und einen Frischluftvolumenstrom von mindestens 30 cbm/h vor.

Ergibt sich aufgrund des im vierten Verfahrensschritt 108 durchgeführten Vergleichs, dass der ermittelte Kabineninnendruck pᵢₛₜ und/oder der ermittelte Frischluftvolumenstrom Vᵢₛₜ den jeweils vorgegebenen Mindestwert pₘᵢₙ bzw. Vₘᵢₙ unterschreitet, so wird in einem fünften Verfahrensschritt 110 die beigemischte Frischluftmenge durch Anheben der Drehzahl des Hilfsgebläses 24 derart erhöht, dass der Kabineninnendruck pᵢₛₜ und/oder der Frischluftvolumenstrom Vᵢₛₜ einen gegenüber dem jeweils vorgegebenen Mindestwert pₘᵢₙ bzw. Vₘᵢₙ erhöhten Richtwert p_{std} bzw. V_{std} erreicht. Der Richtwert p_{std} bzw. V_{std} ist derart gewählt, dass dieser den jeweils zugehörigen Mindestwert pₘᵢₙ bzw. Vₘᵢₙ um etwa 10 bis 20 % übersteigt.

Sollte sich im vierten Verfahrensschritt 108 hingegen ergeben, dass der ermittelte Kabineninnendruck pᵢₛₜ und/oder der ermittelte Frischluftvolumenstrom Vᵢₛₜ den jeweils vorgegebenen Mindestwert pₘᵢₙ bzw. Vₘᵢₙ überschreitet bzw. mit diesem übereinstimmt, so wird mit einem sechsten Verfahrensschritt 112 fortgefahren, in dem die ermittelte Kabineninnentemperatur Tᵢₛₜ durch Auswertung des von dem Temperatursensor 56 bereitgestellten Temperatursignals mit einem vorgegebenen Sollwert Tₛₒₗₗ verglichen wird.

Stellt die Kontrolleinrichtung 30 aufgrund des im sechsten Verfahrensschritt 112 durchgeführten Vergleichs fest, dass die ermittelte Kabineninnentemperatur Tᵢₛₜ um mehr als einen zulässigen Differenzbetrag ΔT von dem vorgegebenen Sollwert Tₛₒₗₗ abweicht, so wird in einem siebten Verfahrensschritt 114 die beigemischte Frischluftmenge durch Absenken der Drehzahl des Hilfsgebläses 24 derart verringert, dass der ermittelte Kabineninnendruck pᵢₛₜ und/oder der ermittelte Frischluftvolumenstrom Vᵢₛₜ den jeweils vorgegebenen Mindestwert pₘᵢₙ bzw. Vₘᵢₙ einnimmt. Somit erfolgt die Beimischung untemperierter Frischluft nach Maßgabe der ermittelten Kabineninnentemperatur Tᵢₛₜ nur insoweit, als dies zur Einhaltung der für den Kabineninnendruck und/oder den Frischluftvolumenstrom jeweils vorgegebenen Mindestwerte pₘᵢₙ bzw. Vₘᵢₙ unbedingt erforderlich ist. Die Anforderungen an die von der Klimatisierungseinrichtung 36 bereitzustellende Kühl- bzw. Heizleistung lassen sich auf diese Weise verringern, ohne dass eine Beeinträchtigung der Kabinenluftqualität in Kauf genommen werden muss.

Wird im sechsten Verfahrensschritt 112 hingegen festgestellt, dass die ermittelte Kabineninnentemperatur den vorgegebenen Sollwert Tₛₒₗₗ um den zulässigen Differenzbetrag ΔT einhält, so kehrt das Verfahren zum ersten Verfahrensschritt 102 zurück.

Zusammenfassend gesprochen wird also dem Umluftstrom mittels des Hilfsgebläses 24 angesaugte Frischluft nach Maßgabe eines Vergleichs zwischen dem ermittelten Kabineninnendruck pᵢₛₜ und dem für den Kabineninnendruck vorgegebenen Mindestwert pₘᵢₙ und/oder zwischen dem ermittelten Frischluftvolumenstrom Vᵢₛₜ und dem für den Frischluftvolumenstrom vorgegebenen Mindestwert Vₘᵢₙ derart beigemischt, dass die jeweils vorgegebenen Mindestwerte pₘᵢₙ bzw. Vₘᵢₙ nicht unterschritten werden. Die Beimischung der Frischluft erfolgt somit fahrerunabhängig entsprechend der für den Kabineninnendruck und/oder den Frischluftvolumenstrom vorgegebenen Mindestwerte pₘᵢₙ bzw. Vₘᵢₙ.

## Patentansprüche

1. Belüftungseinrichtung für eine Fahrerkabine eines Kraftfahrzeugs, mit einem Umluftgebläse (14) zur Erzeugung eines die Fahrerkabine (10) beaufschlagenden Umluftstroms, der mittels einer Klimatisierungseinrichtung (36) temperierbar ist, wobei dem Umluftstrom mittels eines Hilfsgebläses (24) angesaugte Frischluft derart beigemischt wird, dass ein ermittelter Kabineninnendruck (Pᵢₛₜ) und/oder ein ermittelter Frischluftvolumenstrom (Vᵢₛₜ) einen jeweils vorgegebenen Mindestwert (P_{min,} Vₘᵢₙ) nicht unterschreitet, **dadurch gekennzeichnet, dass** die Beimischung der Frischluft nach Maßgabe einer ermittelten Kabineninnentemperatur (Tᵢₛₜ) erfolgt, wobei die beigemischte Frischluftmenge verringert wird, wenn sich ergibt, dass eine ermittelte Kabineninnentemperatur (Tᵢₛₜ) um mehr als einen zulässigen Differenzbetrag (ΔT) von einem vorgegebenen Sollwert (Tₛₒₗₗ) abweicht.

2. Belüftungseinrichtung nach Anspruch 1, **dadurch gekennzeichnet, dass** die Beimischung der Frischluft nach Maßgabe eines Vergleichs zwischen dem ermittelten Kabineninnendruck (pᵢₛₜ) und dem für den Kabineninnendruck vorgegebenen Mindestwert (pₘᵢₙ) erfolgt.

3. Belüftungseinrichtung nach Anspruch 1 oder 2, **dadurch gekennzeichnet, dass** die Beimischung der Frischluft nach Maßgabe eines Vergleichs zwischen dem ermittelten Frischluftvolumenstrom (Vᵢₛₜ) und dem für den Frischluftvolumenstrom vorgegebenen Mindestwert (Vₘᵢₙ) erfolgt.

4. Belüftungseinrichtung nach einem der Ansprüche 1 bis 3, **dadurch gekennzeichnet, dass** die beigemischte Frischluftmenge erhöht wird, wenn sich aufgrund des Vergleichs ergibt, dass der ermittelte Kabineninnendruck (pᵢₛₜ) und/oder der ermittelte Frischluftvolumenstrom (Vᵢₛₜ) den jeweils vorgegebenen Mindestwert (pₘᵢₙ, Vₘᵢₙ) unterschreitet.

5. Belüftungseinrichtung nach einem der Ansprüche 1 bis 4, **dadurch gekennzeichnet, dass** die beigemischte Frischluftmenge derart verringert wird, dass der ermittelte Kabineninnendruck (pᵢₛₜ) und/oder der ermittelte Frischluftvolumenstrom (Vᵢₛₜ) den jeweils vorgegebenen Mindestwert (pₘᵢₙ, Vₘᵢₙ) einnimmt.

6. Belüftungseinrichtung nach einem der Ansprüche 1 bis 5, **dadurch gekennzeichnet, dass** zur Beeinflussung der beigemischten Frischluftmenge die Drehzahl des Hilfsgebläses (24) verändert wird.

7. Belüftungseinrichtung nach einem der Ansprüche 1 bis 6, **dadurch gekennzeichnet, dass** die Klimatisierungseinrichtung (36) einen Verdampfer (38) und/oder ein Heizelement (40) umfasst.

8. Belüftungseinrichtung nach einem der Ansprüche 1 bis 7, **dadurch gekennzeichnet, dass** das Umluftgebläse (14) und/oder das Hilfsgebläse (24) als Radiallüfter ausgebildet ist.

9. Belüftungseinrichtung nach einem der Ansprüche 1 bis 8, **dadurch gekennzeichnet, dass** dem Umluftgebläse (14) und/oder dem Hilfsgebläse (24) ansaugseitig ein Filterelement (32, 34) vorgeschaltet ist.

10. Belüftungseinrichtung nach einem der Ansprüche 1 bis 9, **dadurch gekennzeichnet, dass** eine Erhöhung der beigemischten Frischluftmenge unterbleibt, wenn festgestellt wird, dass eine verschließbare Kabinenöffnung, insbesondere ein mit einer Kabinentür versehener Fahrereinstieg, nicht geschlossen ist.

11. Belüftungseinrichtung nach einem der Ansprüche 1 bis 10, **dadurch gekennzeichnet, dass** bei nicht geschlossener Kabinenöffnung die Ausgabe eines Fahrerhinweises erfolgt.

12. Kraftfahrzeug, insbesondere landwirtschaftliches Nutzfahrzeug, mit einer Belüftungseinrichtung (12) nach einem der Ansprüche 1 bis 11.

## Claims

1. Ventilation device for a driver's cabin of a motor vehicle, having an air circulating fan (14) for producing a flow of circulating air which is supplied to the driver's cabin (10) and the temperature of which can be controlled by means of an air-conditioning device (36), wherein fresh air drawn in by means of an auxiliary fan (24) is added to the flow of circulating air such that a determined cabin internal pressure (pact) and/or a determined fresh air volume flow (V_{act}) does not fall below a respectively predefined minimum value (pₘᵢₙ, Vₘᵢₙᵢ), **characterized in that** the fresh air is added in accordance with a determined cabin internal temperature (T_{act}), wherein the amount of fresh air added is reduced when it is found that a determined cabin internal temperature (T_{act}) deviates from a predefined setpoint value (Tₛₑₜₚ) by more than a permissible difference (ΔT).

2. Ventilation device according to Claim 1, **characterized in that** the fresh air is added in accordance with a comparison between the determined cabin internal pressure (p_{act}) and the minimum value (pₘᵢₙ) predefined for the cabin internal pressure.

3. Ventilation device according to Claim 1 or 2, **characterized in that** the fresh air is added in accordance with a comparison between the determined fresh air volume flow (V_{act}) and the minimum value (Vₘᵢₙ) predefined for the fresh air volume flow.

4. Ventilation device according to one of Claims 1 to 3, **characterized in that** the added amount of fresh air is increased when it is found from the comparison that the determined cabin internal pressure (p_{act}) and/or the determined fresh air volume flow (V_{act}) has fallen below the respectively predefined minimum value (pₘᵢₙ, Vₘᵢₙ).

5. Ventilation device according to one of Claims 1 to 4, **characterized in that** the added amount of fresh air is reduced such that the determined cabin internal pressure (P_{act}) and/or the determined fresh air volume flow (V_{act}) is at the respectively predefined minimum value (pₘᵢₙ, Vₘᵢₙ).

6. Ventilation device according to one of Claims 1 to 5, **characterized in that** the rotational speed of the auxiliary fan (24) is changed in order to affect the amount of fresh air added.

7. Ventilation device according to one of Claims 1 to 6, **characterized in that** the air-conditioning device (36) comprises an evaporator (38) and/or a heating element (40).

8. Ventilation device according to one of Claims 1 to 7, **characterized in that** the air circulating fan (14) and/or the auxiliary fan (24) is configured as a radial blower.

9. Ventilation device according to one of Claims 1 to 8, **characterized in that** a filter element (32, 34) is connected upstream of the air circulating fan (14) and/or of the auxiliary fan (24) on the inlet side.

10. Ventilation device according to one of Claims 1 to 9, **characterized in that** there is no increase in the amount of fresh air added if it is established that a closable cabin opening, in particular a driver's entrance provided with a cabin door, is not closed.

11. Ventilation device according to one of Claims 1 to 10, **characterized in that** a driver notification is output if the cabin opening is not closed.

12. Motor vehicle, in particular an agricultural utility vehicle, having a ventilation device (12) according to one of Claims 1 to 11.

## Revendications

1. Dispositif de ventilation pour la cabine du conducteur d'un véhicule automobile, le dispositif présentant un ventilateur (14) de recirculation d'air qui forme un écoulement de recirculation d'air appliqué dans la cabine (10) du conducteur, la température de l'écoulement d'air de recirculation pouvant être contrôlée au moyen d'un dispositif de climatisation (36), de l'air frais aspiré au moyen d'un ventilateur auxiliaire (24) étant mélangé à l'écoulement d'air de recirculation de manière à ce que la pression effective (pᵢₛₜ) déterminée à l'intérieur de la cabine et/ou un écoulement volumique effectif (Vᵢₛₜ) d'air frais déterminé ne descendent pas en dessous d'une valeur minimale prédéterminée respective (pₘᵢₙ, Vₘᵢₙ), **caractérisé en ce que**
l'apport de l'air frais s'effectue en fonction de la température effective (Tᵢₛₜ) déterminée à l'intérieur de la cabine et
**en ce que** le débit d'air frais ajouté est diminué s'il s'avère que la température effective (Tᵢₛₜ) déterminée à l'intérieur de la cabine s'écarte de plus qu'une valeur admissible de différence (ΔT) d'une valeur de consigne (Tₛₒₗₗ) prédéterminée.

2. Dispositif de ventilation selon la revendication 1, **caractérisé en ce que** l'apport d'air frais s'effectue en fonction d'une comparaison entre la pression effective (pᵢₛₜ) déterminée à l'intérieur de la cabine et la valeur minimale (pₘᵢₙ) prédéterminée pour la pression qui règne à l'intérieur de la cabine.

3. Dispositif de ventilation selon les revendications 1 ou 2, **caractérisé en ce que** l'apport d'air frais s'effectue en fonction d'une comparaison entre le débit volumique effectif (Vᵢₛₜ) déterminé pour l'air frais et la valeur minimale (Vₘᵢₙ) prédéterminée pour le débit volumique d'air frais.

4. Dispositif de ventilation selon l'une des revendications 1 à 3, **caractérisé en ce que** le débit d'air frais ajouté est augmenté si la comparaison indique que la pression effective (pᵢₛₜ) déterminée à l'intérieur de la cabine et/ou le débit volumique effectif (Vᵢₛₜ) d'air frais déterminé n'atteignent pas la valeur minimale respective (pₘᵢₙ, Vₘᵢₙ).

5. Dispositif de ventilation selon l'une des revendications 1 à 4, **caractérisé en ce que** le débit d'air frais ajouté est diminué de telle sorte que la pression effective (pᵢₛₜ) déterminée à l'intérieur de la cabine et/ou l'écoulement volumique (Vᵢₛₜ) d'air frais déterminé prennent la valeur minimale prédéterminée respective (pₘᵢₙ, Vₘᵢₙ).

6. Dispositif de ventilation selon l'une des revendications 1 à 5, **caractérisé en ce que** la vitesse de rotation du ventilateur auxiliaire (24) est modifiée pour agir sur le débit d'air frais apporté.

7. Dispositif de ventilation selon l'une des revendications 1 à 6, **caractérisé en ce que** le dispositif de climatisation (36) comporte un évaporateur (38) et/ou un élément chauffant (40).

8. Dispositif de ventilation selon l'une des revendications 1 à 7, **caractérisé en ce que** le ventilateur (14) de recirculation d'air et/ou le ventilateur auxiliaire (24) sont configurés comme ventilateurs radiaux.

9. Dispositif de ventilation selon l'une des revendications 1 à 8, **caractérisé en ce qu'**un élément de filtration (32, 34) est raccordé en amont du côté aspiration de ventilateur de recirculation (14) et/ou du ventilateur auxiliaire (24).

10. Dispositif de ventilation selon l'une des revendications 1 à 9, **caractérisé en ce que** l'augmentation du débit d'air frais apporté est interrompue s'il s'avère qu'une ouverture refermable de la cabine, en particulier une entrée ce conducteur dotée d'une porte de cabine, n'est pas fermée.

11. Dispositif de ventilation selon l'une des revendications 1 à 10, **caractérisé en ce que** lorsque l'ouverture de la cabine n'est pas fermée, une indication est délivrée au conducteur.

12. Véhicule automobile, en particulier véhicule utilitaire agricole, doté d'un dispositif de ventilation (12) selon l'une des revendications 1 à 11.
